(19) Europäisches Patentamt
European Patent Office
Office européen des brevets

(11) **EP 0 959 367 A2**

(12) **EUROPÄISCHE PATENTANMELDUNG**

(43) Veröffentlichungstag:
24.11.1999 Patentblatt 1999/47

(51) Int. Cl.6: **G01S 7/28**, G01S 7/52,
H01Q 15/02

(21) Anmeldenummer: 99109603.3

(22) Anmeldetag: 14.05.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 19.05.1998 DE 19822445

(71) Anmelder:
L-3 Communications ELAC Nautik GmbH
24118 Kiel (DE)

(72) Erfinder: Schlieter, Heiko
24161 Altenholz (DE)

(74) Vertreter:
Rentzsch, Heinz, Dipl.-Ing.
Schönbornring 1
63263 Neu-Isenburg (DE)

(54) **Verfahren zur räumlichen Richtstrahlbildung in Peilanlagen**

(57) Um bei einem Richtungsbildner für Peilanlagen das Richtdiagramm in allen die Hauptpeilrichtung einschließenden Ebenen schärfer zu bündeln und die Nebenkeulen-Unterdrückung zu verbessern, werden die in zwei Hauptbündelungsebenen (zx, zy, zφ) durch eine besondere Signalverarbeitung erzeugten Richtdiagramme ($R_{HYPxz}$, $R_{HYPyz}$) durch Mittelwertbildung oder multiplikativ miteinander verknüpft.

Fig.2

**Beschreibung**

Die Erfindung geht von dem in der priortätsälteren, als WO 98/23970 am 04.06.1998 veröffentlichten EP-Patentanmeldung 97 951 196.1 beschriebenen Verfahren zur Richtstrahlbildung in Peilanlagen aus, bei dem in einer elektronischen Signalverarbeitungseinrichtung einerseits aus den Beträgen der komplexen Ausgangssignale zweier nebeneinander angeordneter, gleicher Wandlergruppen ein Betrags-Summensignal sowie andererseits der Betrag der Differenz dieser Wandler-Ausgangssignale gebildet und durch Differenz- oder Quotientenbildung aus diesen beiden Betragssignalen ein Ausgangs-Peilsignal abgeleitet wird. Zu diesem Zweck sind zwei gleiche, jeweils mindestens einen elektroakustischen oder elektromagnetischen Wandler (Antenne) aufweisende Wandlergruppen vorgesehen und zu beiden Seiten einer Achse angeordnet. Jede Wandlergruppe $W_L$, $W_R$ erzeugt ein komplexes Ausgangssignal $\mathfrak{R}_L$ bzw. $\mathfrak{R}_R$. Aus diesen komplexen Ausgangssignalen wird zum einen nach der folgenden Gleichung das Betrags-Summensignal gebildet:

$$R_{BSum} = a \bullet |\mathfrak{R}_L| + b \bullet |\mathfrak{R}_R|, \ mit \ a + b = 2. \qquad (7)$$

Zum anderen ermittelt man aus der Differenz $\mathfrak{R}_L$ - $\mathfrak{R}_R$ der komplexen Wandlerausgangssignale den Betrag $R_D$ der komplexen Signaldifferenz nach der Beziehung

$$R_D = |\mathfrak{R}_L - \mathfrak{R}_R|.$$

Schließlich wird aus diesen beiden Betragssignalen z.B. nach der folgenden Gleichung ein resultierendes Ausgangs-Peilsignal

$$R_{HYP} = [(R_{BSum})^n - |\mathfrak{R}_D|^n]^{1/n} \ abgeleitet. \qquad (6)$$

Die Nummerierung der Gleichungen folgt derjenigen der genannten älteren Anmeldung. Die besondere Art der Bildung des Summensignals aus den Beträgen der komplexen Wandler-Ausgangssignale führt, wie in der älteren Anmeldung erläutert, zu einer erheblich verbesserten Nebenkeulen-Unterdrückung sowie zu einer wesentlich stärkeren Strahlbündelung im Empfangsdiagramm. Dies beruht in erster Linie darauf daß, die Nebenkeulen im Betrags-Summensignal-Diagramm und im Differenzbetrags-Diagramm jeweils an der gleichen Winkelposition des Richtdiagramms auftreten.

Mit der vorliegenden, in den unabhängigen Ansprüchen gekennzeichneten Erfindung werden bevorzugte Weiterbildungen dieses Verfahrens zur Erzielung einer verbesserten räumlichen, also dreidimensionalen Strahlbündelung aufgezeigt, d.h. zur Strahlbündelung in allen die Hauptpeilrichtung einschließenden Ebenen. Vorteilhafte Ausgestaltungen der Erfindung ergeben sich aus den Unteransprüchen. Die Erfindung wird nachfolgend anhand von Ausführungsbeispielen aus dem Gebiet der Sonartechnik erläutert. In den Zeichnungen zeigt

Fig.1 ein Koordinatensystem mit mehreren, jeweils die Hauptpeilrichtung z einschließenden Bündelungsebenen zx, 45°, zy;
Fig.2 ein Beispiel einer Wandleranordnung mit vier Wandlergruppen $W_{LV}$, $W_{RV}$, $W_{LH}$, $W_{RH}$ ;
Fig.3 einige mit den verschiedenen Signalkombinationsverfahren erzielbare Richtdiagramme in drei um jeweils 45° um die z-Achse gegeneinander gedrehten Bündelungsebenen, und zwar im Vergleich mit herkömmlich erzeugten sowie nach der älteren Anmeldung erzeugten Richtdiagrammen;
Fig.4 eine Wandleranordnung mit vier Wandlergruppen, wobei die beiden Wandlergruppenpaare nicht rechtwinklig zueinander orientiert sind;
Fig.5 eine Wandleranordnung mit drei Wandlergruppen; und
Fig.6 eine Anwendung, bei die die Bündelung in der die Fahrtrichtung des Schiffes einschließenden Bündelungsebene mit Hilfe einer synthetischen Apertur (SAS Synthetic Aperture Sonar) verbessert wird.

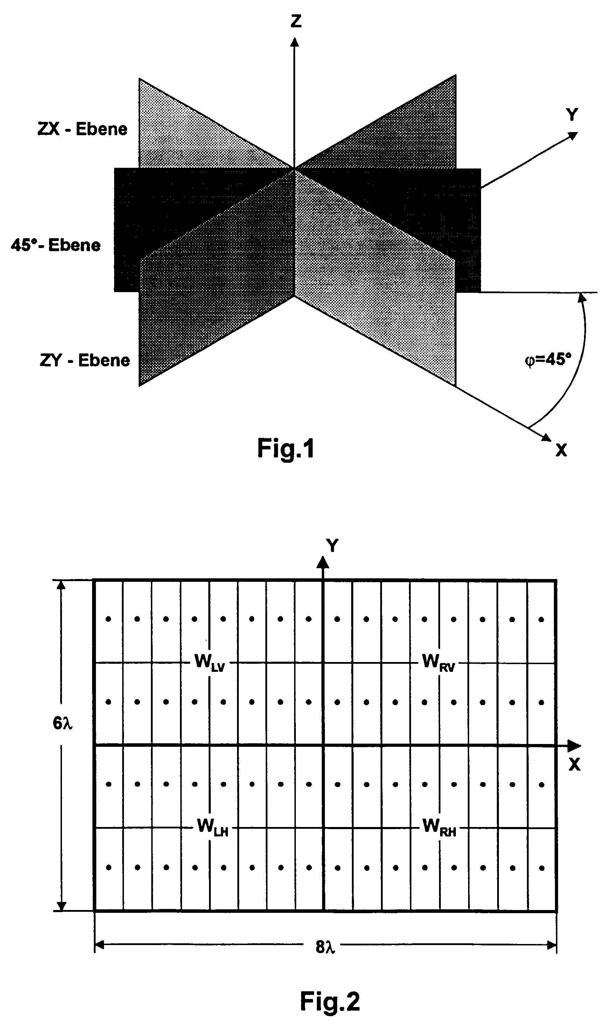

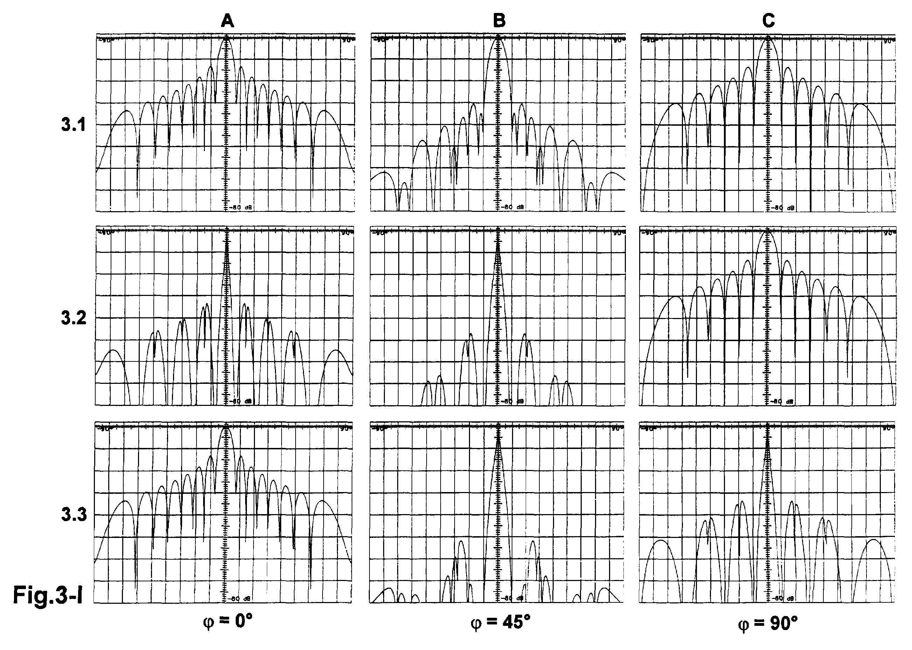

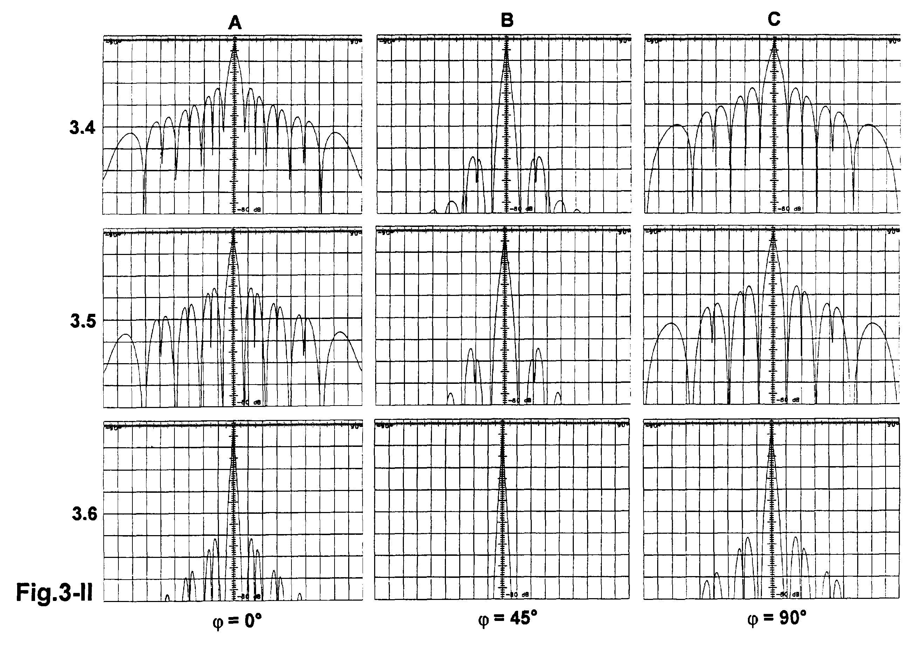

Im Koordinatensystem nach Fig.1 weist die z-Achse in die gewünschte Hauptpeilrichtung, und die Empfangsebene der hier als eben angenommenen Wandleranordnung liegt in der xy-Ebene. Um eine räumliche Bündelung des Richtdiagramms zu erzielen, werden die Empfangssignale jeweils zweier unter einem vorgegebenen Winkel $\varphi$, d.h. im Fall von $\varphi = 90°$ rechtwinklig, zueinander angeordneter gleicher Wandlergruppen der oben beschriebenen Signalverarbeitung unterworfen. Bei der in Fig.2 in Draufsicht gezeigten Wandleranordnung mit vier Wandlergruppen $W_{LV}$, $W_{LH}$, $W_{RV}$ und $W_{RH}$ sind dies zur Bündelung in der zx-Ebene die Signale der linken und rechten Wandlergruppen und zur Bündelung in der zy-Ebene die Signale der vorderen und hinteren Wandlergruppen. Die Indizes bedeuten L = links, R = rechts, V = vorn, H = hinten. Die als Beispiel zur Erzeugung der in Fig.3 gezeigten Richtdiagramme verwendete und in Fig.2 gezeigte Wandleranordnung besteht aus vier Gruppen von je 16 Wandlerelementen und hat in y-Richtung eine Ausdehnung von 6 Wellenlängen $\lambda$ und in x-Richtung von $8\lambda$. Die von den vier Wandlergruppen gelieferten komplexen Ausgangssignale werden mit $\Re_{LV}$, $\Re_{LH}$, $\Re_{RV}$ bzw. $\Re_{RH}$ bezeichnet Fig. 1 zeigt unterschiedlich schraffiert die beiden bei der Wandleranordnung gemäß Fig.2 rechtwinklig zueinander stehenden und jeweils die Hauptpeilrichtung z einschließenden Hauptbündelungsebenen zx und zy sowie eine um $\varphi$ = 45° um die z-Achse gegenüber der zx-Ebene gedrehte Zwischenebene, welche als 45°-Ebene bezeichnet ist.

Die Bildung des Betrags-Summensignals $R_{BSum}$ und des Betrags-Differenzsignals $R_D$ erfolgt in der zuvor beschriebenen Weise, d.h.

$$R_{BSum} = a \bullet |\Re_L| + b \bullet |\Re_R| \text{ mit } a + b = 2 \text{ d.h.} \qquad (7)$$

$$R_{BSum} = |\Re_L| + |\Re_R|, \text{ wenn } a = b = 1; \quad \text{oder}$$

$$R_{BSum} = 2\,|\Re_L|, \text{ wenn } b = 0; \quad \text{bzw. } R_{BSum} = 2\,|\Re_R|, \text{ wenn } a = 0; \quad \text{sowie}$$

$$R_D = |\Re_L - \Re_R|.$$

Dabei wird für die Bündelung in der xz-Ebene

$$\Re_L = \Re_{LV} + \Re_{LH}$$

eingesetzt und für $\Re_R$ dementsprechend

$$\Re_R = \Re_{RV} + \Re_{RH}.$$

Zur Bündelung in der yz-Ebene wird analog hierzu

$$\Re_V = \Re_{LV} + \Re_{RV}$$

gesetzt und für $\Re_H$ folglich

$$\Re_H = \Re_{LH} + \Re_{RH},$$

d.h.

$$\Re_L = \Re_{LH} + \Re_{LV} \qquad \Re_R = \Re_{RH} + \Re_{RV} \qquad (8)$$

$$\Re_H = \Re_{LH} + \Re_{RH} \qquad \Re_V = \Re_{LV} + \Re_{RV}$$

Eine gewünschte Verbesserung der Bündelung kann man in jeder der beiden Hauptebenen durch Anwendung von Gleichung (6) erzielen:

$$R_{HYP} = [(R_{BSum})^n - |\Re_D|^n]^{1/n},$$

mit vorzugsweise 0 < n < 2 und 0 < m < 2. Dies führt für die xz-Ebene beispielsweise zu

$$R_{IIYPxz}(n) = [(|\mathfrak{R}_L| + |\mathfrak{R}_R|)^n - |\mathfrak{R}_L - \mathfrak{R}_R|^n]^{1/n} \tag{9a}$$

und für die yz-Ebene zu

$$R_{HYPyz}(m) = [(|\mathfrak{R}_H| + |\mathfrak{R}_V|)^m - |\mathfrak{R}_H - \mathfrak{R}_V|^m]^{1/m} \tag{9b}$$

Will man die Bündelung gleichzeitig sowohl in der xz-Ebene als auch in der yz-Ebene sowie auch in allen (vgl. Fig.1) dazwischen liegenden Ebenen, d.h. räumlich verbessern, so schlägt die vorliegende Erfindung vor, die in den beiden Hauptbündelungsebenen nach obigen Gleichungen gewonnenen gebündelten Richtdiagramme $R_{HYPxz}$ und $R_{HYPyz}$ miteinander zu verknüpfen, und zwar beispielsweise durch eine spezielle Mittelwertbildung, durch geometrische Mittelwertbildung oder multiplikativ. Im Falle einer solchen speziellen Mittelwertbildung erhält man ein resultierendes dreidimensional gebündeltes Ausgangs-Peilsignal

$$R_{HYPxyz}(n,m) = \left[\frac{c(R_{HYPxz}(n))^{1/q} + d(R_{HYPyz}(m))^{1/q}}{2}\right]^q , \tag{10}$$

mit $0 < q < \infty$ , vorzugsweise $1 \leq q \leq 10$ und mit $0 \leq c \leq 2$ ; $0 \leq d \leq 2$ sowie $c + d = 2$ , vorzugsweise $c = d = 1$ .

Eine geometrische Mittelwertbildung führt nach der folgenden Gleichung zu einem ebenfalls räumlich schärfer gebündelten Ausgangs-Peilsignal:

$$R_{HYPxyz}(n,m) = (R_{HYPxz}(n) \cdot R_{HYPyz}(m))^{1/2} \tag{11}$$

Schließlich kann man die in den beiden hier beispielsweise senkrecht zueinander stehenden und jeweils die Hauptpeilrichtung einschließenden Hauptbündelungsebenen erzeugten, verbesserten Richtdiagramme auch multiplikativ nach folgender Beziehung verknüpfen, um zu einer schärferen räumlichen Bündelung zu kommen:

$$R_{Hypxyz}(n,m) = R_{Hypxz}(n) \cdot R_{HYPyz}(m) \tag{12}$$

Im Prinzip sind auch andere Verknüpfungen der den beiden Hauptbündelungsebenen zugeordneten Ausgangssignale möglich und werden je nach den gestellten Anforderungen und den Randbedingungen des speziellen Anwendungsfalls ihre Vorteile entfalten. Das Wesentliche besteht darin, daß durch die gewählte Verknüpfung der nach den Gleichungen (9a) und (9b) gewonnenen Ausgangssignalwerte der beiden Hauptebenen eine gezielte Beeinflussung und Verbesserung des resultierenden räumlichen Richtdiagramms erreicht werden kann.

Zur Erläuterung dieser Verbesserungen wird auf Fig.3 verwiesen, welche sich aus einem ersten Blatt 3-I mit den Diagrammzeilen 3.1 bis 3.3 sowie einem zweiten Blatt 3-II mit den Diagrammzeilen 3.4 bis 3.6 zusammensetzt. In jeder Zeile zeigt das linke Diagramm A die Gestalt des Richtdiagramms in der zx-Ebene mit $\varphi = 0°$, das mittlere Diagramm B den Verlauf in der 45°-Ebene mit $\varphi = 45°$ und das rechte Diagramm C die zy-Ebene mit $\varphi = 90°$, jeweils im logarithmischen Maßstab bis zu einer Dämpfung von -80dB. Diese Richtdiagramme wurden für eine Wandleranordnung nach Fig.2 berechnet.

Die erste Diagrammzeile 3.1 zeigt das normale Summensignal

$$R_{Sum} = |\mathfrak{R}_L + \mathfrak{R}_R| ,$$

welches in der 45°-Ebene gemäß Spalte B eine geringere Nebenkeulenamplitude hat als in der zx-Ebene (Sp.A) und in der zy-Ebene (Sp.C). Die zweite Zeile 3.2 gibt die Diagramme $R_{HYPxz}$ im Fall einer Signalverarbeitung gemäß Gleichung (9a) wieder und Zeile 3.3 die Ausgangs-Peilsignale $R_{HYPyz}$ gemäß Gleichnung (9b). Man sieht, daß $R_{HYPxz}$ in der zx-Ebene (Sp.A) schärfer gebündelt ist als das Summensignal $R_{Sum}$, in der 45°-Ebene (Sp.B) ebenfalls eine verbesserte Bündelung und Nebenkeulen-Unterdrückung zeigt, in der um $\varphi = 90°$ um die zx-Ebene gedrehten zy-Ebene (Sp.C) hingegen praktisch unbeeinflußt bleibt. Für das in Zeile 3.3 wiedergegebene Ausgangs-Peilsignal $P_{HYP_{yz}}$ liegen die Verhältnisse gerade umgekehrt. In der zx-Ebene (Sp.A) bleibt das nach der älteren Anmeldung verarbeitete Peilsignal gegenüber dem reinen Summensignal nach Zeile 3.1 praktisch unverändert, in der 45°-Ebene (Sp.B) ist es etwas besser gebündelt und in der zy-Ebene (Sp.C) noch schärfer gebündelt.

Zeile 3.4 zeigt die gemäß der Erfindung nach Gleichung (10) bei q = 2 und c = d = 1 erzeugten Diagramme des resultierenden Ausgangssignals $R_{HYP_{xyz}}$, Zeile 3.5 das Ergebnis der Signalverarbeitung nach Gleichung (11) und Zeile 3.6 die Folge einer Anwendung von Gleichung (12). In allen drei Fällen ergibt sich im Vergleich zum normalen Summensignal (Diagrammzeile 3.1) jetzt eine Bündelungsverbesserung und Erhöhung der Nebenkeulendämpfung in allen Raumebenen (vgl. Sp. A, B, und C), während die Richtcharakteristik-Eigenschaften bei der Signalverarbeitung nach der älteren Anmeldung in den zur Hauptbündelungsebenen senkrechten Ebenen unbeeinflußt bleiben. Ganz deutlich zeigen sich Richtdiagramm-Verbesserungen in Zeile 3.6, wo sowohl die Bündelung als auch die Nebenkeulen-Unterdrückung erheblich verbessert sind.

Bislang wurde die räumliche Bündelung des Richtstrahls am Beispiel der Wandleranordnung von Fig.2 mit zwei rechtwinklig zueinander orientierten Wandlergruppenpaaren ($\varphi$ = 90°) und somit für senkrecht aufeinander stehende Hauptbündelungsebenen (zx, zy) beschrieben. Dabei wurde ohne Einschränkung der Allgemeingültigkeit für die zx-Ebenene $\varphi$ = 0 und für die zy-Ebenen $\varphi$ = 90° definiert. Das Verfahren gemäß der Erfindung ist aber keineswegs auf rechtwinklig zueinander orientierte Wandlergruppenpaare beschränkt, sondern die Wandlergruppenpaare können auch unter einem anderen, von Null verschiedenenen Winkel $\varphi$ zueinander orientiert sein. Es muß nur dafür gesorgt sein, daß sich gleiche Wandlergruppen und Wandlergruppenpaare ergehen. Die Gleichungen (8), (9a) und (9b) sowie die Verknüpfungsgleichungen (10), (11) und (12) sind dann sinngemäß anzuwenden. Geht man weiter davon aus, daß die erste Hauptbündelungsebene die zx-Ebene mit $\varphi$ = 0 ist, so ist die zweite Hauptbündelungsebene nun nicht mehr um 90° sondern um einen beliebigen Winkel $\varphi \neq$ 90° um die z-Achse gedreht. Während $R_{HYP_{xz}}$ gemäß Gleichung (9a) weiterhin das Ausgangssignal in der ersten Hauptbündelungsebene, nämlich der xz-Ebene ist, ist die zweite Hauptbündelungsebene nicht mehr die yz-Ebene mit $\varphi$ = 90° sondern eine Zwischenebene, welche unter einem beliebigen Winkel 0 < $\varphi$ < 90° gegenüber der xz-Ebene um die z-Achse gedreht ist und deshalb als $\varphi$z-Ebene bezeichnet werden kann. Die Gleichung (9b) führt dann zu einem Ausgangssignal $R_{HYP_{\varphi z}}$ in dieser zweiten Hauptbündelungsebene, welches dann gemäß den Gleichungen (10), (11) bzw. (12) anstelle von $R_{HYP_{yz}}$ verarbeitet wird.

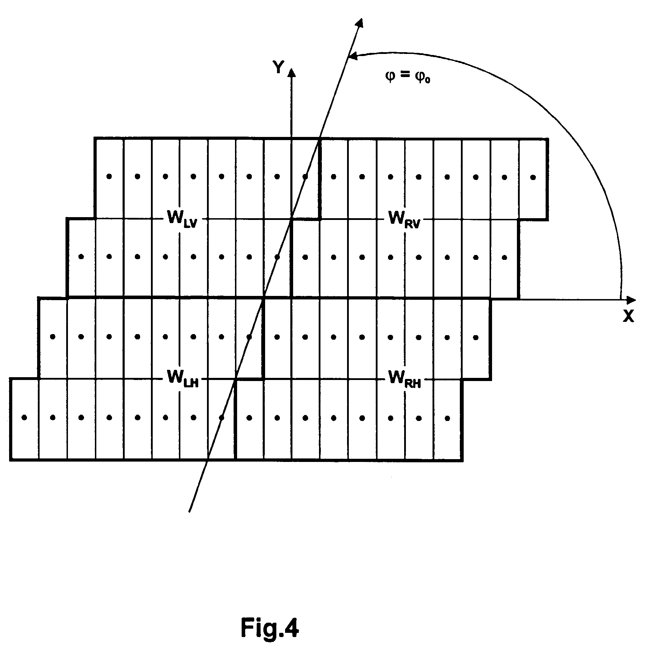

Fig.4 zeigt ein Beispiel einer solchen Wandleranordnung, bei der aus den vier Wandlergruppen $W_{LH}$, $W_{LV}$, $W_{RH}$ und $W_{RV}$ zwei Wandlergruppenpaare gebildet sind, die nicht rechtwinklig zueinander orientiert sind. Die Hauptbündelungsebenen sind hier die zx-Ebene und eine gegenüber dieser um den Winkel $\varphi \neq$ 90° gedrehte, die z-Achse einschließende $\varphi$z-Ebene.

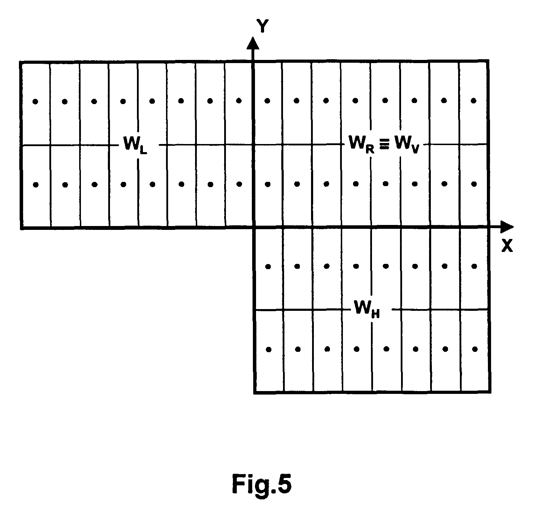

Zur räumlichen Bündelung der Richtstrahls lassen sich zwei Wandlergruppenpaare nicht nur, wie bisher beschrieben aus vier Wandlergruppen bilden, sondern es genügen hierfür schon drei gleiche Wandlergruppen. Ein Beispiel zeigt Fig.5. Die komplexen Ausgangssignale $\Re_L$, $\Re_R$, $\Re_V$ und $\Re_H$ für die Berechnung nach den Gleichungen (9a) und (9b) stammen von den drei Wandlergruppen $W_L$, $W_H$ und $W_R = W_V$ , wobei

$$\Re_R = \Re_V$$

gilt. Auch hier können die Wandlergruppenpaare unter einem von 90° verschiedenen Winkel $\varphi$ zueinander orientiert sein.

Die mit der Erfindung erzielbare Verbesserung der Richtcharakteristik gilt auch für Richtdiagramme, deren Hauptpeilrichtung durch phasenversetzte Ansteuerung oder Abtastung der Wandler in den einzelnen Wandlergruppen geschwenkt wird.

Die Anwendung der Erfindung bei einem seitlich peilenden Schiff oder U-Boot hat beispielsweise den Vorteil, daß neben einer guten Bündelungsschärfe in der gegebenenfalls schwenkbaren seitlichen Hauptpeilrichtung auch eine hohe Nebenkeulen-Unterdrückung in der die Fahrtrichtung einschließenden Ebene erzielt wird, so daß z.B. das Schraubengeräusch der eigenen Schiffsschraube die Peilung nicht beeinträchtigt.

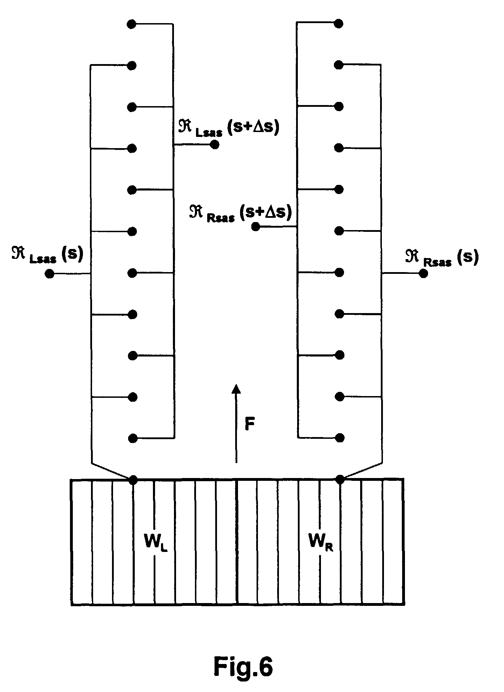

Eine weitere Ausgestaltung der Erfindung veranschaulicht Fig.6. Das Schiff ist hier beispielsweise mit einer linken Wandlergruppe $W_L$ und einer rechten Wandlergruppe $W_R$ ausgestattet, welche horizontal ausgerichtet sind, also nach unten loten. Jede Wandlergruppe besteht aus mehreren Wandlerelementen, damit die Hauptpeilrichtung in bekannter Weise durch phasengestaffelte Erregung und/oder Abtastung in Querabrichtung geschwenkt werden kann. Die beiden Wandlergruppen sind, bezogen aufdie Fahrtrichtung F nebeneinander angeordnet. Durch Anwendung der Gleichung (9a) des Hauptpatents erzielt man unterhalb des Schiffes und seitlich geschwenkt eine Bündelungsverbesserung in der sich quer zur Fahrtrichtung F erstreckenden Vertikalebene. Um eine Bündelung auch in den die Fahrtrichtung F einschließenden Ebenen zu erzeugen, wird hier zunächst eine sogenannte synthetische Apertur angewandt, bei der längs des Fahrtweges in vorgegebenen räumlichen oder zeitlichen Abständen $\Delta s$ bzw. $\Delta t$ Peilungen durchgeführt und die komplexen Empfangssignale $\Re_{L_{sas}}$ und $\Re_{R_{sas}}$ der beiden Wandlergruppen $W_L$ bzw. $W_R$ zwischengespeichert werden. Man bezeichnet dieses bekannte Verfahren, bei dem die resultierende Apertur gegenüber den Abmessungen der Wandleranordnung erheblich vergrößert und damit die Peilschärfe erhöht werden kann, als Sonar mit synthetischer Apertur SAS (Synthetic Apertur Sonar). Die an bestimmten Wegpositionen $s_i$ gemessenen und zwischengespeicherten Signale werden dann phasenversetzt überlagert, um in einer die Fahrtrichtung einschließenden Ebene ein scharf gebündeltes Richtdiagramm zu erzeugen. Um dieses Diagramm auch in der sich quer zur Fahrtrichtung F erstreckenden Vertikalebene stärker zu bündeln, werden die beiden komplexen, durch SAS erzeugten Ausgangssignale $\Re_{Lsas}$ und $\Re_{Rsas}$ der linken bzw. rechten Wandlergruppe analog zu Gleichung (6) beispielsweise nach folgender Gleichung zu einem resultierenden Ausgangs-Peilsignal $R_{HYPsas}$ (n) kombiniert:

$$R_{HYPsas}(n) \; = \; [\; (\; |\; \Re_{Lsas}\; |+|\; \Re_{Rsas}\; |\; )^n - |\; \Re_{Lsas} - \Re_{Rsas}\; |^n\; ]^{1/n}\; , \text{ mit } 0 < n < \infty. \tag{13}$$

Dabei müssen Betrag und Phase von $\Re_{Lsas}$ und $\Re_{Rsas}$ verfügbar, d.h. die linken und rechten SAS-Signale komplex gebildet sein.

## Patentansprüche

1. Verfahren zur Richtstrahlbildung in Peilanlagen mit folgenden Schritten:

a) Bilden eines ersten Wandlergruppenpaars aus zwei gleichen, jeweils mindestens einen Wandler umfassenden Wandlergruppen ($W_L$, $W_R$ ), die zu beiden Seiten einer ersten Achse (y) angeordnet sind;
b) Bilden eines zweiten Wandlergruppenpaars aus zwei gleichen, jeweils mindestens einen Wandler umfassenden Wandlergruppen ($W_V$, $W_H$), die zu beiden Seiten einer zweiten Achse (x) angeordnet sind, welche mit der ersten Achse einen Winkel $\varphi \neq 0°$, einschließt;
c) mit Hilfe einer elektronischen Signalverarbeitungsschaltung Berechnen eines ersten Betrags-Summensignals $R_{Bsum(xz)}$ aus den Beträgen $|\Re_L|$ und $|\Re_R|$ der komplexen Ausgangssignale $\Re_L$, $\Re_R$ der Wandlergruppen des ersten Wandlergruppenpaars ($W_L$ ,$W_R$ ) nach der Gleichung

$$R_{Bsum(xz)} \; = \; a \bullet |\; \Re_L\; | \; + \; b \bullet |\; \Re_R\; |, \; \text{ mit } a + b = 2; \tag{7a}$$

d) Berechnen eines zweiten Betrags-Summensignals $R_{Bsum(yz)}$ aus den Beträgen $|\Re_V|$ und $|\Re_H|$ der komplexen Ausgangssignale $\Re_V$, $\Re_H$ der Wandlergruppen des zweiten Wandlergruppenpaars ($W_V$, $W_H$ ) nach der Gleichung

$$R_{Bsum(yz)} \; = \; a' \bullet |\; \Re_V\; | \; + \; b' \bullet |\; \Re_{H}\; |, \text{ mit } a' + b' = 2; \tag{7b}$$

e) Berechnen eines ersten Differenz-Betragssignals

$$R_{D(xz)} \; = \; |\; \Re_L - \Re_R\; |$$

aus den komplexen Ausgangssignalen der Wandlergruppen des ersten Wandlergruppenpaars;
f) Berechnen eines zweiten Differenz-Betragssignals

$$R_{D(yz)'} \; = \; |\; \Re_V - \Re_H\; |$$

aus den komplexen Ausgangssignalen der Wandlergruppen des zweiten Wandlergruppenpaars;
g) Berechnen eines resultierenden Ausgangssignals für eine erste, die Hauptstrahlrichung (z) einschließende Hauptbündelungsebene (xz) nach der Gleichung

$$R_{HYPxz}(n) = [(\,|\mathfrak{R}_L| + |\mathfrak{R}_R|\,)^n - |\mathfrak{R}_L - \mathfrak{R}_R|^n]^{1/n}, \text{ mit } 0 < n < 2; \qquad (9a)$$

h) Berechnen eines resultierenden Ausgangssignals für eine, ebenfalls die Hauptstrahlrichtung (z) einschließende und gegenüber der ersten Hauptstrahlrichtung um einen Winkel $\varphi \neq 0$ geneigte zweite Hauptbündelungsebene (yz) nach der Gleichung

$$R_{HYPyz}(m) = [(\,|\mathfrak{R}_H| + |\mathfrak{R}_V|\,)^m - |\mathfrak{R}_H - \mathfrak{R}_V|^m]^{1/m}, \text{ mit } 0 < m < 2; \qquad (9b)$$

i) multiplikatives Kombinieren der in den beiden Hauptbündelungsebenen gewonnenen resultierenden Ausgangssignale ($R_{HYPxz}$, $R_{HYPyz}$) zu einem dreidimensional gebündelten Richtstrahl ($R_{HYPxyz}$).

2. Verfahren nach Anspruch 1, dadurch gekennzeichnet, daß die Signalkombination durch Mittelwertbildung nach der Gleichung

$$R_{HYPxyz}(n,m) = \left[\frac{c(R_{HYPxz}(n))^{1/q} + d(R_{HYPyz}(m))^{1/q}}{2}\right]^q, \qquad (10)$$

erfolgt, wobei $0 < q < \infty$ ; $0 \leq c \leq 2 : 0 \leq d \leq 2$ und $c + d = 2$ gilt.

3. Verfahren nach Anspruch 1 oder 2, dadurch gekennzeichnet, daß a = b = 1 gewählt ist.

4. Verfahren nach Anspruch 1 oder 2, dadurch gekennzeichnet, daß a = 0 oder b = 0 gewählt ist.

5. Verfahren nach einem der Ansprüche 2 bis 4, dadurch gekennzeichnet, daß $1 \leq q \leq 10$ ist.

6. Verfahren nach einem der Ansprüche 2 bis 5, dadurch gekennzeichnet, daß c = d = 1 ist.

7. Verfahren nach Anspruch 1, dadurch gekennzeichnet, daß die Signalkombination multiplikativ nach der Gleichung

$$R_{HYPxyz}(n,m) = (R_{HYPxz}(n) \cdot R_{HYPyz}(m))^{1/2} \text{ erfolgt.} \qquad (11)$$

8. Verfahren nach Anspruch 1, dadurch gekennzeichnet, daß die Signakombination multiplikativ nach der Gleichung

$$R_{Hypxyz}(n,m) = R_{Hypzx}(n) \cdot R_{HYPyz}(m) \text{ erfolgt} \qquad (12)$$

9. Verfahren zur Richtstrahlbildung in Peilanlagen mit zwei gleichen, jeweils mindestens einen Wandler umfassenden Wandlergruppen ($W_L$ , $W_R$), die zu beiden Seiten einer die Fahrtrichtung (F) eines Schiffs einschließenden Vertikalebene angeordnet sind, wobei

a) in einer elektronischen Signalverarbeitungsschaltung aus den komplexen Ausgangssignalen der links von der genannten Vertikalebene angeordneten Wandlergruppe durch Erzeugen einer synthetischen Apertur (SAS) ein erstes komplexes SAS-Signal $\mathfrak{R}_{Lsas}$ abgeleitet wird;
b) aus den komplexen Ausgangssignalen der rechts von der genannten Vertikalebene angeordneten Wandlergruppe durch Erzeugen einer synthetischen Apertur ein zweites komplexes SAS-Signal $\mathfrak{R}_{Rsas}$ generiert wird; und
c) aus den beiden komplexen SAS-Signalen ein resultierendes Ausgangs-Peilsignal ($R_{HYPsas}(n)$) nach der Gleichung

$$R_{HYPsas}(n) = \left[ \left( |\mathfrak{R}_{Lsas}| + |\mathfrak{R}_{Rsas}| \right)^n - |\mathfrak{R}_{Lsas} - \mathfrak{R}_{Rsas}|^n \right]^{1/n} \qquad (13)$$

mit $0 < n$ und $a + b = 2$ berechnet wird.

**Fig.1**

**Fig.2**

Fig.3-I

**A** **B** **C**

3.4

3.5

3.6

**Fig.3-II**

φ = 0°     φ = 45°     φ = 90°

EP 0 959 367 A2

**Fig.4**

Fig.5

$\mathfrak{R}_{Lsas}(s+\Delta s)$

$\mathfrak{R}_{Rsas}(s+\Delta s)$

$\mathfrak{R}_{Lsas}(s)$

$\mathfrak{R}_{Rsas}(s)$

F

$W_L$

$W_R$

Fig.6